# EUROPEAN PATENT APPLICATION

(11) **EP 1 749 681 A2**
(43) Date of publication of application: **07.02.2007**
(21) Application number: 06118285.3
(22) Date of filing: 02.08.2006
(51) Int. Cl.: B60H 1/32, F25B 9/00

(54) **Air conditioning systems for vehicles**

(30) Priority: 05.08.2005 JP 2005227799
(71) Applicant: Sanden Corporation, Isesaki-shi, Gunma 372-8502 (JP)
(72) Inventor: Matsumoto, Yuuichi, Isesaki-shi Gunma 372-8502 (JP); Tsuboi, Masato, Isesaki-shi Gunma 372-8502 (JP); Suzuki, Kenichi, Isesaki-shi Gunma 372-8502 (JP)
(74) Representative: Haley, Stephen

(57) **Abstract**

An air conditioning system for a vehicle includes a compressor (1), a gas cooler (4), an expansion means (8), and a cooler (9). The system also includes an elevated pressure density detector (3,6) for detecting or estimating one or more physical values having a correlation with a density of an elevated pressure refrigerant in a refrigeration cycle. An elevated pressure density controller (14) controls the density of the elevated pressure refrigerant. This control is achieved at least in part by using at least one of the one or more physical values.

## Description

The present invention relates generally to air conditioning systems for vehicles. More specifically, the present invention is directed towards vehicle air conditioning systems having a vapor compression refrigeration cycle which may use a natural-system refrigerant, such as carbon dioxide.

Vehicle air conditioning systems using carbon dioxide gas as a refrigerant in a vapor compression refrigeration cycle operate at an elevated pressure. The pressure of the refrigerant in an elevated pressure-side line is adjusted by controlling with an external control signal an opening degree of a valve of an electric expansion mechanism (for example, Japanese Published Patent Application No. H0-7-294033A). An objective of such a system is the optimization of a coefficient of performance of the refrigeration cycle through control of the pressure in the elevated pressure-side line. The pressure in the elevated pressure-side line is calculated using the temperature of the elevated pressure-side refrigerant in the elevated pressure-side line. The opening degree of the valve of the expansion mechanism then is controlled so that the pressure of the elevated pressure-side refrigerant moves towards an optimum value.

In the known systems described above, the displacement of a variable displacement compressor externally is controlled in order to adjust an exit-side air temperature of an evaporator. The signal for controlling the displacement is calculated from information of thermal load.

In this known system and control method, it is difficult to achieve stable control using the elevated pressure-side refrigerant temperature alone, because the temperature is measured during a transient state of the refrigeration cycle and a target pressure of the elevated pressure-side line changes continuously with the temperature. More specifically, because the temperature is measured during a transient state of the refrigeration cycle, the system may search for the optimization point without achieving stable control.

Accordingly, a need has arisen for vehicle air conditioning systems that overcome these and other inconveniences of the related art. A technical advantage of the present invention is the ability to achieve stable control of the system. Another technical advantage of the present invention is the simplification of the control of the system. Yet another technical advantage of the present invention is an improved coefficient of performance of the refrigeration cycle.

According to an embodiment of the present invention, an air conditioning system for a vehicle comprises a compressor, a gas cooler, an expansion means, and a cooler. The system also comprises an elevated pressure density detecting means for detecting or estimating one or more physical values having a correlation with the density of an elevated pressure refrigerant in a refrigeration cycle. An elevated pressure density control means controls the density of the elevated pressure refrigerant. This control is achieved at least in part by using at least one of the one or more physical values.

According to another embodiment of the present invention, a method is provided for controlling an air conditioning system for a vehicle during a refrigeration cycle. The method comprises the steps of detecting or estimating one or more physical values and calculating a value of the density of the elevated pressure refrigerant. The method further comprises the steps of determining whether a second at least one of said one or more physical values is greater than or equal to a predetermined threshold value, and setting a density target value based on the result of the determination. In addition, the method comprises the steps of calculating the value of a control signal using a deviation between the calculated density value and the density target value. The method further comprises the steps of controlling an expansion means with the control signal.

Other objects, features, and advantages of the present invention will be apparent to persons of ordinary skill in the art in view of the following detailed description of the invention and the accompanying drawings.

For a more complete understanding of the present invention, the needs satisfied thereby, and the objects, features, and advantages thereof, reference now is made to the following description taken in connection with the accompanying drawings.

**Fig. 1** is a schematic diagram of an air conditioning system for vehicles according to an embodiment of the present invention.

**Fig. 2** is a block diagram of a control method according to an embodiment of the present invention.

**Fig. 3** is a flowchart of a control method according to an embodiment of the present invention.

**Fig. 4** is a pressure-enthalpy-diagram of carbon dioxide refrigerant for illustrating that an elevated pressure-side refrigerant density may be determined from a refrigerant pressure and a refrigerant temperature according to embodiments of the present invention.

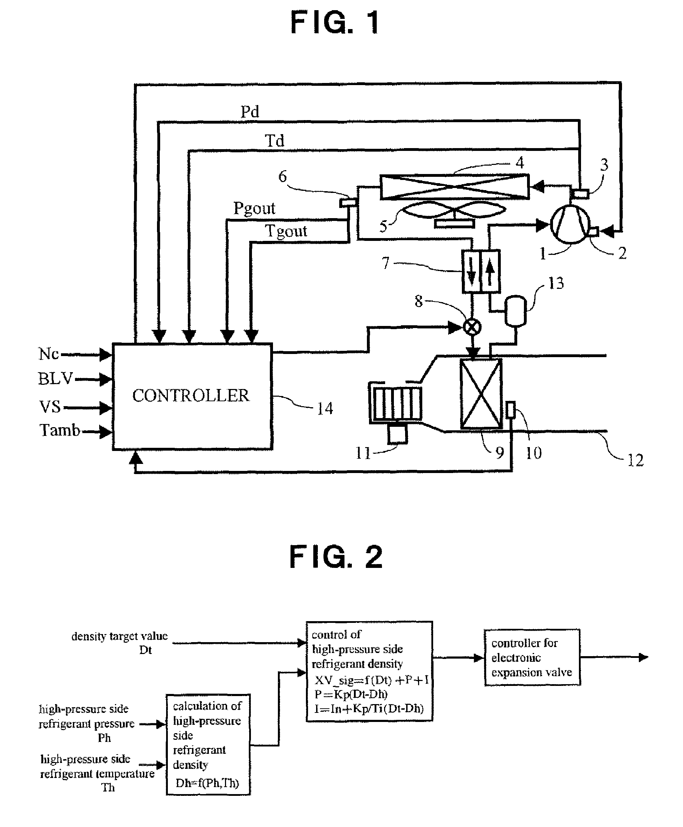

Embodiments of the present invention and their features and technical advantages may be understood by referring to **Figs. 1-4.** These embodiments are presented by way of example only and are not intended to limit the present invention.

**Fig. 1** depicts an air conditioning system for vehicles according to an embodiment of the present invention. **Fig. 1** shows the mechanical arrangement of components and the control means of an air conditioning system using carbon dioxide gas as the natural-system refrigerant. The mechanical arrangement of components may include an air circuit and a refrigeration circuit. In the refrigeration circuit, a compressor 1, a gas cooler 4 (e.g. a radiator), an expansion means 8 (e.g. an electronic expansion valve), a cooler 9 (e.g. an evaporator), and a liquid/gas separator 13 (e.g. an accumulator) may be provided. Further, in this embodiment, an inside heat exchanger 7 may be provided in the refrigeration circuit for performing heat exchange between the elevated pressure-side refrigerant and the lower-pressure side refrigerant. Gas cooler 4 may reduce the temperature of the elevated pressure-side refrigerant using outside air sent by a fan 5 for heat radiation. Cooler 9 may be disposed in an air duct 12 of an air conditioning unit. The temperature of air sent from a blower 11 may be reduced by cooler 9, and the cooled air may be sent toward the vehicle interior.

A fixed displacement compressor, a variable displacement compressor, or the equivalent may be used as compressor 1. An engine of a vehicle may be used as a drive source, but other non-engine drive sources also may be used. The cooling effect of cooler 9 may be controlled via a displacement control signal of compressor 1, which controls a displacement control valve 2, or via ON/OFF control of a clutch (not shown) of compressor 1. Feedback for the temperature control loop may be obtained from the temperature of air exiting cooler 9, which may be detected by an air temperature sensor 10. Liquid/gas separator 13 may separate the refrigerant sent from cooler 9 into liquid and gas, may store the liquid refrigerant, and may flow out the gas refrigerant towards compressor 1.

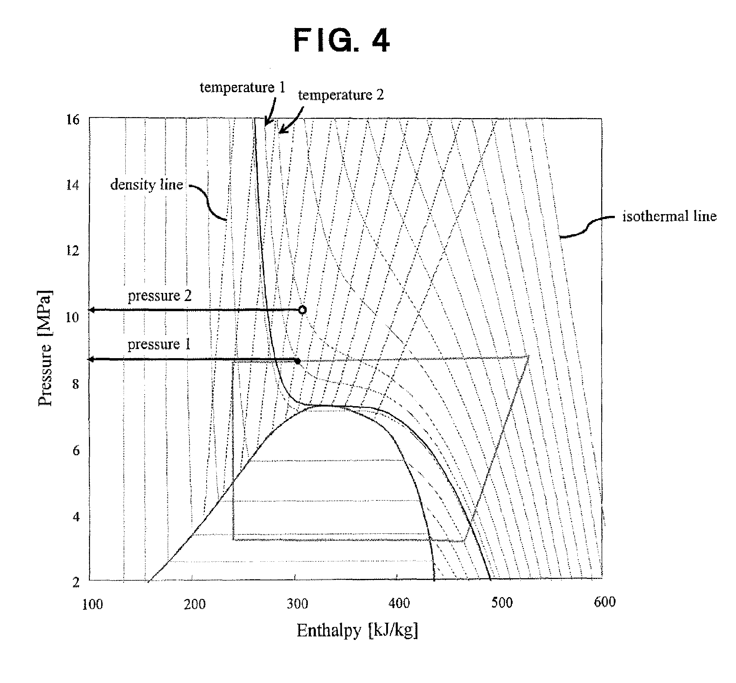

As shown in **Fig. 1,** a first PT sensor 3 (P: pressure; T: temperature) may be provided at a discharge side of compressor 1 for detecting a pressure and a temperature of the elevated pressure-side refrigerant discharged by compressor 1. A second PT sensor 6 may be provided at an exit-side of gas cooler 4 for detecting a pressure and a temperature of the elevated pressure-side refrigerant after being cooled by gas cooler 4. Detection signals Pd and Td from first PT sensor 3, detection signals Pgout (refrigerant pressure at the exit-side of the gas cooler) and Tgout (refrigerant temperature at the exit-side of the gas cooler 4), and the detection signal from air temperature sensor 10 may be sent to a controller 14, which may control the air conditioning system. Further, a compressor rotational speed signal Nc, a voltage (rotational speed) signal BLV of blower 11, a vehicle running speed signal VS, an outside air temperature signal Tamb, and other signals may be input to controller 14. The displacement control signal for compressor 1 may be output from controller 14 to displacement control valve 2. Another control signal may be output from controller 14 to expansion means 8 for controlling the density of the elevated pressure-side refrigerant. A value of the control signal may be calculated using a density value, which is detected or estimated according to a predetermined characteristic (e.g. **Fig. 4**), and a density target value, which may be a predetermined constant value. The value of the control signal may determine an opening degree of a valve or an expansion ratio (i.e., a ratio between pressures at an entrance and an exit of the expansion means), which in turn may change the density of the elevated pressure refrigerant to become the density target value.

A density detecting means may also be constructed substantially integrally with expansion means 8. In this embodiment, second PT sensor 6 may be located downstream of inside heat exchanger 7 with expansion means 8.

In an embodiment of the present invention, the density of the elevated pressure-side refrigerant may be calculated by referring to the pressure and the temperature of the elevated pressure-side refrigerant detected by second PT sensor 6, according the relationship illustrated in **Fig. 4. Fig. 4** shows a pressure-enthalpy diagram of carbon dioxide refrigerant with isothermal lines. As shown in **Fig. 4,** if the pressure and the temperature of the elevated pressure-side refrigerant are detected by second PT sensor 6 (e.g., detection in the supercritical range), it is possible to calculate the density of the refrigerant. In this example, the refrigerant densities may be calculated from the equations for density, which are functions of the pressure and temperature at each time (e.g., pressure 1 and temperature 1; pressure 2 and temperature 2), respectively.

**Fig. 2** depicts an embodiment of the control means of the present invention. In this embodiment, control may be performed as follows:
(1) The density of the elevated pressure-side refrigerant Dh may be calculated using the detected pressure Ph and the detected temperature Th of the elevated pressure-side refrigerant.
(2) The density of the elevated pressure-side refrigerant may be controlled using a density target value Dt and the calculated, elevated pressure-side refrigerant density Dh. More specifically, by performing proportional and integral calculations based on the deviation between the density target value Dt and the calculated, elevated pressure-side refrigerant density Dh, the magnitude of the control signal sent to electronic expansion valve 8 may be calculated.
(3) The control signal to expansion means 8 may be sent first to an electronic expansion valve controller (not shown in **Fig. 1**), if an electronic expansion valve is used in the expansion means. By controlling expansion means 8, the elevated pressure-side refrigerant density Dh may be adjusted towards the elevated pressure-side refrigerant density target value Dt, such that it substantially equals the density target value Dt.

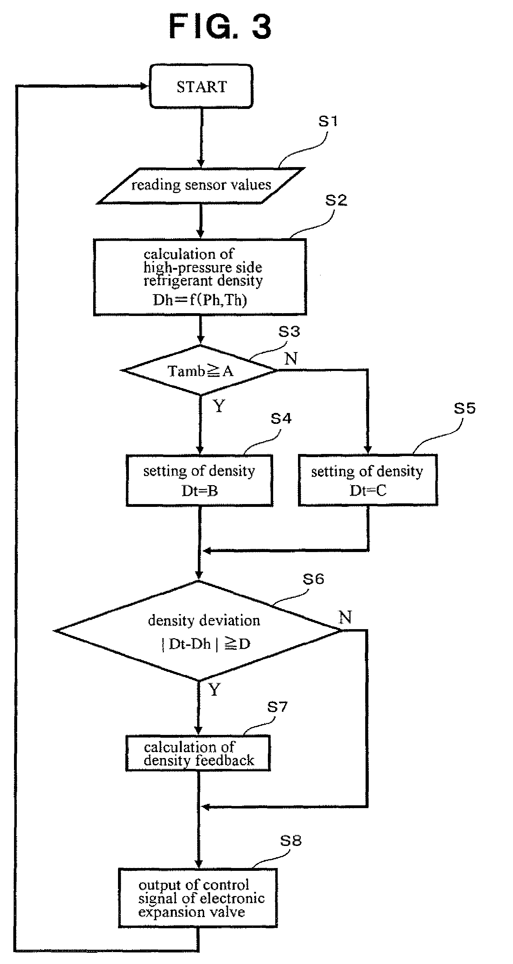

**Fig. 3** shows an example of a control method according to an embodiment of the present invention.

The above-described sensor values may be read at step S1. The determination (e.g., calculation) of the elevated pressure-side refrigerant density depicted in **Fig. 2** may be carried out at step S2. At step S3, it may be determined whether outside air temperature Tamb is greater than or equal to a predetermined value A, and a result may be generated (e.g., yes or no). At steps S4 and S5 density target values may be set. If Tamb is greater than or equal to the predetermined value A, then the elevated pressure-side refrigerant density target value Dt may be set to a predetermined value B in step S4. If Tamb is less than the predetermined value A, then the elevated pressure-side refrigerant density target value Dt may be set to a predetermined value C in step S5. Therefore, although the elevated pressure-side refrigerant density target value Dt changes in response to the outside air temperature Tamb, it need not change continuously. In this manner, the control means may establish simple and stable control of the system.

Next, the density deviation may be determined in step S6. If the density deviation is a predetermined value D or more, determination (e.g., calculation) of the density feedback (e.g., control signal to the electronic expansion valve 8) may be performed in step S7. The control signal then may be output to the electronic expansion valve at step S8, in order to achieve the elevated pressure-side refrigerant density target value Dt.

Although the elevated pressure-side refrigerant pressure may be detected at the exit-side of gas cooler 4 by second PT sensor 6 as described in embodiments above, it also may be detected at the compressor discharge-side by first PT sensor 3. Although it is generally preferable to detect the elevated pressure-side refrigerant at the exit-side of gas cooler 4 with second PT sensor 6, it may also be detected by first PT sensor 3 at the compressor discharge-side.

Further, in the above-described step S3, the density target value may be set after it is determined whether the elevated pressure-side refrigerant pressure Ph is a predetermined value E, or more, or less. In addition, although an electronic expansion valve, such as expansion valve 8, may be used in the above-described embodiment, a mechanical-type expansion mechanism (e.g., an expander) or other equivalent structure also may be used.

The control means and methods described herein achieve stability of control using an uncomplicated structure. They also enhance the ability to maintain a desirable coefficient of performance during the refrigeration cycle.

## Claims

1. An air conditioning system for a vehicle, comprising:
a compressor;
a gas cooler;
an expansion means;
a cooler;
an elevated pressure density detecting means for detecting or estimating one or more physical values having a correlation with a density of an elevated pressure refrigerant in a refrigeration cycle; and
an elevated pressure density control means for controlling said density of said elevated pressure refrigerant, wherein said density is controlled at least in part by using at least one of said one or more physical values.

2. The air conditioning system of claim 1, wherein a density value of said elevated pressure refrigerant is determined from said at least one of said one or more physical values according to a predetermined characteristic, and a density target value is determined by comparing an additional physical value with a predetermined threshold value, wherein said additional physical value is either one of said one or more physical values or is detected with a second detection means.

3. The air conditioning system of claim 2, wherein said second detection means comprises a temperature detector for detecting an outside air temperature.

4. The air conditioning system of claim 2, wherein said elevated pressure density control means comprises means for adjusting said density value of said elevated pressure refrigerant towards said density target value.

5. The air conditioning system of claim 4, wherein said means for adjusting said density of said elevated pressure refrigerant comprises means for controlling an opening degree of a valve or means for controlling an expansion ratio of said expansion means.

6. The air conditioning system of claim 4, wherein said means for adjusting said density of said elevated pressure refrigerant comprises a control signal, and the magnitude of said control signal is determined from a deviation between said density target value and said density value.

7. The air conditioning system of any preceding claim, wherein said expansion means comprises means for changing an opening degree of a valve or an expansion ratio of said expansion means according to a predetermined relationship between said at least one of said one or more physical values and a density target value of said density of said elevated pressure refrigerant.

8. The air conditioning system of any preceding claim, wherein said expansion means comprises means for controlling an opening degree of a valve or an expansion ratio of said expansion means, so that said density of said elevated pressure-side refrigerant substantially equals a predetermined density.

9. The air conditioning system of any preceding claim, wherein said elevated pressure density detecting means and said expansion means are constructed substantially integrally.

10. The air conditioning system of any preceding claim, wherein said elevated pressure density detecting means comprises a temperature sensor and a pressure sensor.

11. The air conditioning system of claim 10, wherein a density target value is controlled in response to a pressure of said elevated pressure refrigerant, and said pressure is detected by said pressure sensor.

12. The air conditioning system of claim 11, wherein said density target value is a first value when said pressure of said elevated pressure refrigerant is greater than or equal to a predetermined value, and said density target value is a second value when said pressure of said elevated pressure refrigerant is less than said predetermined value.

13. The air conditioning system of any preceding claim further comprising an outside air temperature detecting means for detecting an outside air temperature, wherein a density target value varies in response to said outside air temperature.

14. The air conditioning system of claim 13, wherein said density target value is a first value when said outside air temperature is greater than or equal to a predetermined value, and said density target value is a second value when said outside air temperature is less than said predetermined value.

15. The air conditioning system of any preceding claim, wherein said refrigerant is carbon dioxide.

16. A method for controlling an air conditioning system for a vehicle during a refrigeration cycle, comprising:
detecting or estimating one or more physical values;
determining a density value of a density of an elevated pressure refrigerant using at least one of said one or more physical values;
determining whether a second at least one of said one or more physical values is greater than or equal to a first predetermined threshold value and generating a result;
setting a density target value based on said result;
determining a control value of a control signal using a deviation between said density value and said density target value, if said deviation is greater than or equal to a second predetermined threshold value;
controlling an expansion means with said control signal.

17. The method of claim 16, wherein said one or more physical values comprise a temperature of said elevated pressure refrigerant, a pressure of said elevated pressure refrigerant, and an outside air temperature.

18. The method of claim 16 or 17, further comprising controlling an opening degree of a valve or an expansion ratio of said expansion means with said control signal.

19. The method of any of claims 16 to 18, wherein said step of determining said density value further comprises calculating said value according to a predetermined characteristic.

20. The method of any of claims 16 to 19, wherein said step of determining said control value further comprises calculating said control value using said deviation between said density value and said density target value, if said deviation is greater than or equal to said second predetermined threshold value.
